# EUROPÄISCHE PATENTSCHRIFT

(11) **EP 2 449 877 B1**
(45) Veröffentlichungstag und Bekanntmachung des Hinweises auf die Patenterteilung: **01.03.2017**
(21) Anmeldenummer: 11187723.9
(22) Anmeldetag: 03.11.2011
(51) Int. Cl.: A01G 23/093, A01D 43/08

(54) **Mäh-Hackvorrichtung zur Ernte großwüchsiger Pflanzen**
Mowing-cutting device for harvesting large plants
Dispositif de hachage et de tonte pour la récolte de plantes de grande taille

(30) Priorität: 03.11.2010 DE 102010043317
(43) Veröffentlichungstag der Anmeldung: 09.05.2012
(73) Patentinhaber: Leibniz-Institut für Agrartechnik Potsdam-Bornim e.V., 14469 Postdam-Bornim (DE)
(72) Erfinder: Ehlert, Detlef, 14469 Potsdam (DE); Hoffmann, Thomas, 14469 Potsdam (DE); Kohn, Harald, 14532 Stahnsdorf (DE); Frank, Uwe, 14469 Potsdam (DE); Anlauf, Axel, 14548 Schwielowsee OT Geltow (DE)
(74) Vertreter: Müller & Schubert

(56) Entgegenhaltungen:
- EP-A1- 0 943 230
- WO-A1-2007/066161
- DE-A1- 2 139 203
- DE-A1- 2 256 831
- FR-A1- 2 428 387
- US-A- 4 014 373

## Beschreibung

Die Erfindung betrifft eine Mäh-Hackvorrichtung zur Ernte großwüchsiger Pflanzen. Weiterhin betrifft die vorliegende Erfindung ein Verfahren zur Ernte großwüchsiger Pflanzen unter Verwendung der erfindungsgemäßen Vorrichtung.

Im Zusammenhang der vorliegenden Erfindung sind unter großwüchsigen Pflanzen beispielsweise Bäume wie Kurzumtriebsgehölze und auch Sträucher und stängelige Pflanzen wie Mais zu verstehen. Wenn nachfolgend der Begriff "Pflanzen" verwendet wird, sind darunter die oben genannten großwüchsigen Pflanzen zu verstehen.

Unter Ernte wird im Zusammenhang der vorliegenden Erfindung das Abschneiden der Pflanzen und die Verarbeitung der abgeschnittenen Pflanzen zu Hackschnitzeln (Schüttguttechnologie) verstanden.

Wenn im Zusammenhang der vorliegenden Erfindung der Begriff "Mitte" einer Pflanze verwendet wird, wird von einer aufgerichteten, also stehenden Pflanze ausgegangen, und "Mitte" kennzeichnet den Bereich, der der halben Wuchshöhe der Pflanze entspricht.

Um Verfahren zur Ernte von Pflanzen wettbewerbsfähig zu gestalten, sind bei Einhaltung der zu stellenden Anforderungen an das Erntegut die Kosten so gering wie möglich zu halten.

Dies kann sowohl durch eine hohe Ernteleistung als auch durch die Bereitstellung von Vorrichtungen erreicht werden, die niedrige Kosten verursachen. Weiterhin können die Kosten gering gehalten werden, indem möglichst viele Verfahrensschritte unter Verwendung einer einzigen Vorrichtung durchgeführt werden.

Bei der Ernte von Pflanzen entsprechend der Schüttguttechnologie bedeutet das, die Prozesse Zuführen, Abschneiden, Zerkleinern und Fördern auf eine Transportvorrichtung in einem Arbeitsgang durchzuführen, wobei das Fördern auf die Transportvorrichtung ohne zusätzliche Antriebs- oder Förderelemente erfolgt.

Unter einem Arbeitsgang wird hierbei verstanden, dass die einzelnen Verfahrensschritte innerhalb einer Vorrichtung nacheinander durchgeführt werden.

Ein typisches Beispiel dafür ist das Ernten von Bäumen aus dem stehenden Bestand in Kurzumtriebsplantagen.

Zur Ernte von Bäumen in Kurzumtriebsplantagen sind im Stand der Technik bereits Vorrichtungen bekannt und werden gegenwärtig auch verwendet.

Ein Teil der Vorrichtungen des Stands der Technik, wie beispielsweise in DE 20 2007 007 213 U1 offenbart, basiert auf der Anwendung von in der Landwirtschaft eingesetzten, selbstfahrenden Feldhäckslern mit hoher Motorleistung. Bei diesen Lösungen werden die im für landwirtschaftliche Anwendungen entwickelten Feldhäcksler bereits vorhandenen Baugruppen wie Einzugswalzen, Häckseltrommel und Wurfgebläse genutzt, um die Bäume zu zerkleinern und die entstehenden Hackschnitzel auf entsprechende Transportfahrzeuge zu laden. Um die in der Plantage stehenden Bäume abzuscheiden und sie der Häckseltrommel zuzuführen, wurden für diese selbstfahrenden Feldhäcksler Vorsätze entwickelt, die einen erheblichen zusätzlichen technischen Aufwand erfordern. Diese Vorsätze bestehen aus rotierenden Schneideinheiten, mit denen die Pflanzen abgeschnitten werden, nachdem sie mittels einer gabelförmigen Leiteinrichtung in Schräglage gebracht worden sind. Die abgeschnittenen Pflanzen werden anschließend in eine annähernd horizontale Lage gebracht, aus der sie mittels spezieller rotierender Hebearme und horizontal angeordneter Walzen über weitere Einzugswalzen der eigentlichen Häckseltrommel im Feldhäcksler zugeführt werden. Nachteilig an dieser Lösung sind die sehr hohen technischen Aufwendungen, die zu hohen Maschinenmassen und Erntekosten führen.

Für eine weitere Gruppe von Erntemaschinen des Standes der Technik ist charakteristisch, dass das Abschneiden der Bäume, das Zerkleinern und das Fördern des Erntegutes in einen Sammelbehälter oder auf ein Transportfahrzeug von einer speziell für diese Verwendung entwickelten Maschine realisiert werden. Als Basismaschine werden dafür in der Regel Traktoren der mittleren bis oberen Leistungsklasse verwendet. Die Zusatzbaugruppen werden dabei sowohl im Heckanbau als auch im Frontanbau betrieben.

Im Stand der Technik erfolgt das Abschneiden der Bäume vorrangig mit kreisförmigen Sägeblättern, deren Rotationsachse annähernd senkrecht angeordnet ist. Bei einem Vorrichtungstyp werden die Bäume nach dem Abschneiden in eine annähernd horizontale Lage gebracht und danach mit Hilfe spezieller Aufnahmeelemente der Zerkleinerungseinrichtung (Häckseltrommel, Schnecke) zugeführt. Kennzeichnend für dieses Ernteprinzip ist, dass die Pflanzen vor und während des Abschneidens vom Wurzelstock in Fahrtrichtung gebogen werden. Bei großen Pflanzen mit einem stärkeren Stamm entsteht damit die Gefahr des Abbrechens bzw. des Herausreißens des gesamten Wurzelballens aus dem Erdreich.

Bei anderen Lösungen des Standes der Technik verbleiben die Bäume in annähernd senkrechter Ausrichtung und werden mittels spezieller Zuführelemente wie Trommeln oder Schnecken zur Zerkleinerung zugeführt.

Für diese Lösungen des Standes der Technik ist charakteristisch, dass sie einen erheblichen Aufwand für die Fertigung der Vorrichtungen sowohl in Bezug auf das Material als auch auf die zur Fertigung benötigte Arbeitszeit erfordern und die daraus resultierenden hohen Anschaffungskosten eine hohe Einführungsschwelle beim Anbau von Energiepflanzen in Kurzumtriebsplantagen erzeugen.

Im SU-Patent 912115 wird vorgeschlagen, langstängelige Pflanzen mit einer Vorrichtung in nahezu senkrechter Ausrichtung zu ernten, indem nach dem Abschneiden mit auf einer Scheibe angebrachten Messern das Erntegut stückweise von unten her zerkleinert wird. Dabei werden die Pflanzen in einem schräg angestellten Zuführkanal geführt. Entsprechend eigenen Erfahrungen und in Übereinstimmung mit der Lehre des EP 0 562 406 B1, ist bei Pflanzen mit ausgebildeten Seitenzweigen bzw. Kronenbildung der für den Erntevorgang notwendige Einzug nicht gewährleistet.

In der WO 2009/070897 A1 wird eine Einrichtung vorgeschlagen, die bereits über eine zusätzliche Zuführbaugruppe verfügt, die im Zusammenwirken mit einer Schneidscheibe einen verbesserten Einzug bewirken soll. Die Zuführbaugruppe besteht aus einer paarig angeordneten Schnecken-Walzenkombination, die sich annähernd über der Drehachse der Schneidscheibe befindet. Im Zusammenwirken mit einem Führungsprofil soll eine verbesserte Zuführung der abgeschnittenen Pflanzen (Stämme) gewährleistet werden. Das Abschneiden erfolgt mit speziellen Schneidelementen, die am Außenumfang einer schräg gestellten Hackscheibe angeordnet sind. Um die abgeschnittenen Pflanzen zu zerkleinern, ist die Hackscheibe mit radial angeordneten Hackmessern versehen. Die Hackscheibe besitzt Schlitze und ist daher durchlässig, damit die Hackschnitzel in einen darunter gelegenen Hohlraum übergeben werden können. Die Hackscheibe ist an ihrer Unterseite zusätzlich mit Wurfschaufeln besetzt, die die Hackschnitzel infolge der Zentrifugalkraft aus dem Hohlraum nach außen durch eine Abwurföffnung fördern. Von dort aus werden die Hackschnitzel von einer weiteren Fördereinrichtung wie z.B. einem Gurtbandförderer übernommen. Aus Einsatzerfahrungen ist bekannt, dass das sichere Zuführen von großen in Reihe wachsenden Pflanzen eine weitere Abstützung und Maßnahmen des Zusammenführen im Bereich des Pflanzenschwerpunktes erfordern. Weiterhin ist die maschinenbautechnische Umsetzung in eine konkrete Erntemaschine mit erheblichen technischen Aufwendungen verbunden (z.B. die Lagerung und der Antrieb der Hackscheibe).

In der DE 1 657 329 B wird eine Maschine zum Ernten von Mais oder ähnlichem stängelartigen Erntegut vorgeschlagen. Auch hier wird eine Zuführbaugruppe bestehend aus einer paarig angeordneten Schnecken-Walzenkombination im Zusammenwirken mit einer rotierenden Mäh- und Häckselscheibe vorgeschlagen. Die Häckselscheibe ist ebenfalls durchlässig gestaltet, so dass sich das zerkleinerte Gut unterhalb der Häckselscheibe in einem Hohlraum ansammelt. Von dort aus wird es mit Wurfschaufeln infolge der Zentrifugalkraft durch eine Öffnung im Mantel des Hohlraums in den Einwirkungsbereich eines weiteren Wurfgebläses mit waagerechter Drehachse ausgeworfen. Nachteilig ist wie bei den anderen beschriebenen Lösungen, dass die Mäh- und Hackscheibe durchdrungen werden muss, ein zusätzlicher Hohlraum unterhalb der Mäh- und Häckselscheibe sowie eine zusätzliche Fördereinrichtung erforderlich sind, um das Häckselgut auf die Behälter von Transportmitteln zu übergeben.

In der EP 0 562 406 B1 werden Ausführungsvarianten sowohl für das Hackwerkzeug als auch für Zuführeinrichtungen vorgeschlagen. Es ist bekannt, dass Hackschnecken relativ schwer zu fertigen sind. Während des Einsatzes unterliegen sie an den Schneidkanten einem Verschleiß, der zu stark zerfaserten Schnitzeln und steigendem Energieaufwand führt. Weiterhin ist das Nachschärfen von stumpf gewordenen Schnecken aufwändig.

Aus Untersuchungen ist den Erfindern bekannt, dass eine sichere Zuführung von großwüchsigen Pflanzen in eine Hackschnecke mit vertikaler Drehachse ohne zusätzliche aktive Zuführbaugruppen nicht gewährleistet ist. Als weitere Lösungsoption werden daher in einer Ausführungsform des Standes der Technik Zuführbaugruppen, bestehend aus aktiv angetriebenen und paarig angeordneten Zuführwalzen mit horizontaler Drehachse vorgeschlagen, wobei das untere Walzenpaar als Zerkleinerungseinrichtung ausgebildet ist. Um eine Aufnahme und das Fördern der zu zerkleinernden Pflanzen zu ermöglichen, sind die Walzen kegelförmig ausgebildet. Es ist ebenfalls bekannt, dass Pflanzenreihen erhebliche Breiten annehmen können, die bis zum Reihenabstand selbst betragen können. Nachteilig ist daher bei dieser Lösung des Standes der Technik, dass nur eine Aufnahmebreite erreicht werden kann, die maximal dem Achsabstand der kegelförmigen Einzugswalzen entspricht. Soll ein akzeptabler Achsabstand erreicht werden, sind sehr große Kegelwalzen erforderlich, die die Masse und Kosten der Maschine in die Höhe treiben.

Weiterhin hat sich bei Praxisuntersuchungen herausgestellt, dass beim Einsatz von Kegelwalzen die vom Sägeblatt abgeschnittenen Pflanzen dazu neigen, nach vorn in Fahrtrichtung aus dem Walzenspalt heraus zu fallen. In der in der EP 0 562 406 B1 vorgeschlagenen Ausführungsform sind sieben rotierbare Funktionsbaugruppen, bestehend aus drei Kegelwalzenpaaren sowie dem Schneid-Wurf-Rotor erforderlich, um den Erntevorgang durchzuführen.

In der WO 2007/066161 A1 werden rotierbare schraubenförmige Zuführelemente vorgeschlagen, die die Pflanze etwa in der Mitte in einem ersten Schritt erfassen, zuführen und fixieren. Damit soll verhindert werden, dass die Pflanzen nach dem Abschneiden vom Wurzelstock umfallen. Nach dem Abschneiden mit zwei paarig angeordneten Kreissägeblättern werden die Pflanzen im unteren Bereich von zwei gegenläufig rotierbaren Einzugsschnecken erfasst, die am Ende in Walzen übergehen. Diese Walzen erfassen die Pflanzen und fördern sie in Richtung Hackscheibe, über der eine Gegenschneide angeordnet ist. Durch die Wirkung der Hackmesser und mittels zusätzlicher Wurfschaufeln wird das Hackgut aus dem Gehäuse ausgeworfen.

Bei eigenen Untersuchungen haben die Erfinder festgestellt, dass die schraubenförmigen Zuführelemente in der in der WO 2007/066161 A1 beschriebenen Form nur bedingt die geforderte Funktion erfüllen, da die außen stehenden Pflanzen nicht erfasst werden. Nachteilig zu bewerten ist ebenfalls, dass das Abschneiden und Zerkleinern der Pflanzen mit drei Werkzeugen erfolgt, die um unterschiedliche Achsen rotieren. In der in der genannten internationalen Patentanmeldung vorgeschlagenen Ausführungsform sind sieben rotierbare Funktionsbaugruppen, bestehend aus zwei schraubenförmigen Einzugswendeln, zwei Kreissägeblättern, zwei Einzugsschnecken sowie einem Hackrotor mit Wurfschaufeln erforderlich.

In der EP 2 301 320 A1 werden ebenfalls rotierbare schraubenförmige Zuführelemente vorgeschlagen, die die Pflanzen etwa in der Mitte in einem ersten Schritt erfassen, zuführen und fixieren. Um eine hinreichende Aufnahmebreite zu ermöglichen, sind die Zuführelemente nach außen angestellt. Damit können abgeschnittene Pflanzen nach vorn in Fahrtrichtung herausfallen und zu Funktionsstörungen führen. Das Abschneiden der Pflanzen erfolgt ebenfalls mit zwei paarig angeordneten Kreissägeblättern. Um den Einzug des unteren Pflanzenbereichs zu unterstützen, sind zusätzlich schräg angestellte Förderschnecken angeordnet. Diese übergeben die Pflanzen an paarig angeordnete Einzugs- und Presswalzen, die die Pflanzen der Hacktrommel zuführen. Die Hacktrommel ist kegelstumpfförmig ausgebildet. Das Hackgut wird anschließend von der Hacktrommel an eine nachgeordnete Auswurfeinheit übergeben. Nachteilig ist bei dieser Lösung der erhebliche technische Aufwand für die zahlreichen rotierenden Baugruppen für die Zuführung, das Abschneiden, den Einzug, den Vorschub, das Zerkleinern und den Gutauswurf. In der vorgeschlagenen Ausführungsform sind zehn rotierbare Funktionsbaugruppen, bestehend aus zwei schraubenförmigen Einzugswendeln, zwei Kreissägeblättern, zwei Einzugsschnecken, zwei Einzugs- und Presswalzen, einem Hackrotor sowie einer Auswurfeinheit erforderlich.

Charakteristisch für die oben diskutierten Vorrichtungen des Standes der Technik ist die große Anzahl der erforderlichen Baugruppen. Das ist insbesondere in Bezug auf die Herstellungskosten und den Wartungsbedarf nachteilig. Weiterhin ist zu berücksichtigen, dass das Gewicht der Vorrichtungen mit der Anzahl der erforderlichen Baugruppen steigt. Das bedeutet natürlich auch, dass ein damit verbundenes höheres Gewicht mit einem höheren Energieverbrauch beim Betrieb der Vorrichtung verbunden ist, was sich negativ auf die Betriebskosten auswirkt und im Hinblick auf die Umwelt nachtteilig ist.

In Bezug auf den Stand der Technik kann zusammenfassend gesagt werden, dass es bisher nicht gelungen ist, mit technisch geringem Aufwand in Reihen stehende große Pflanzen bzw. Bäume in annähernd senkrechter Position in einem Arbeitsschritt abzuschneiden und sie in dieser Position funktionssicher einem Hackwerkzeug zur vollständigen Zerkleinerung zuzuführen.

Der Erfindung liegt daher die Aufgabe zu Grunde, die Nachteile des Standes der Technik zu überwinden.

Die Aufgabe der vorliegenden Erfindung wird gelöst durch die Bereitstellung einer einfachen, kompakten und vergleichsweise leichten Vorrichtung, welche annähernd senkrecht aus dem Untergrund herausragende, zu erntende Pflanzen aus einer horizontalen Bewegung der Vorrichtung abzuschneiden vermag und die Pflanzen in einem zweiten Schritt in eine nach unten gerichtete Bewegung bringt, um sie der Zerkleinerung zuzuführen. Erfindungswesentlich ist hierbei, dass in direktem Anschluss an die Zerkleinerung der Pflanze die Förderung des erhaltenen Häckselguts zum Transportbehälter ohne weitere angetriebene Baugruppen erfolgt. Für die Zerkleinerung der Pflanzen und die Förderung zum Abtransport werden also keine zusätzlichen Baugruppen benötigt.

Im Unterschied zu bekannten Vorrichtungen erfolgt die Förderung der Hackschnitzel erfindungsgemäß direkt zu einem Transportbehälter, so dass keine Unterbrechung des Materialflusses der Hackschnitzel innerhalb der Vorrichtung erfolgt. Damit entfällt auch das Erfordernis, zusätzliche, angetriebene Förderbaugruppen verwenden zu müssen.

Hierdurch ist die Konstruktion der erfindungsgemäßen Vorrichtung aufgrund der Reduktion der Anzahl von Baugruppen wesentlich vereinfacht und kann auch wesentlich kompakter gestaltet werden, denn es besteht kein Bedarf an zusätzlichen Baugruppen für die Förderung der Hackschnitzel. Die erfindungsgemäße Vorrichtung besitzt deshalb ein im Vergleich zu Vorrichtungen des Standes der Technik wesentlich geringeres Gewicht.

Die Aufgabe der vorliegenden Erfindung wird also gelöst durch die Bereitstellung einer einfachen und kostengünstigen Erntemaschine, welche nur vier rotierbare Funktionsbaugruppen umfasst. Erfindungsgemäß wird dies erreicht durch die Kombination eines rotierbaren undurchlässigen Werkzeugträgers 1, bestückt mit einem Schneidring 2 und Hackmessern 3 zum Abschneiden und Zerkleinern der Pflanzen sowie zum Auswerfen und Fördern der Hackschnitzel, mit einem rotierbaren Sternrad 13 und einem Schnecken-Walzenpaar 8,9 für die annähernd senkrechte Zuführung der abgeschnittenen Pflanzen zu den Hackmessern 3 zur weiteren vollständigen Zerkleinerung.

Die Aufgabe der Erfindung wird durch die Bereitstellung einer Mäh-Hackvorrichtung 100 zur Ernte großwüchsiger Pflanzen gelöst, umfassend eine spezifische Kombination gemäß Anspruch 1 von a) einem für Hackschnitzel undurchlässigen, rotierbaren Werkzeugträger 1, b) einem Schneidring 2, c) mindestens einem auf dem Werkzeugträger 1 angeordneten Hackmesser 3, d) einer im Abwurfbereich der Hackschnitzel angeordneten Abführvorrichtung für Hackschnitzel 4, e) mindestens einer Anordnung zur annähernd senkrechten Ausrichtung der abgeschnittenen Pflanzen, f) mindestens einer Zuführungsvorrichtung für abgeschnittene Pflanzen in den Einwirkungsbereich des mindestens einen Hackmessers 3 und g) mindestens einer Vorrichtung zur Verbindung mit einer Antriebseinheit 5.

Insbesondere bevorzugt ist eine Mäh-Hackvorrichtung, bei welcher der Schneidring 2 an seinem äußeren Rand Sägezähne oder einen Messerschliff besitzt.

In einer besonders bevorzugten Ausführungsform der Mäh-Hackvorrichtung 100 ist oberhalb des mindestens einen Hackmessers 3 ein Gegenhalter 7 angeordnet.

Erfindungsgemäß weiterhin bevorzugt ist eine Mäh-Hackvorrichtung 100, bei welcher die Abführvorrichtung für Hackschnitzel 4 als Kanal ausgebildet ist.

Bevorzugt ist weiterhin eine Mäh-Hackvorrichtung 100, die dadurch gekennzeichnet ist, dass die Abführvorrichtung für Hackschnitzel 4 Fördermittel und/oder eine Sammelvorrichtung umfasst.

Vorteilhaft ist weiterhin eine Mäh-Hackvorrichtung 100, bei welcher die mindestens eine Anordnung zur annähernd senkrechten Ausrichtung der Pflanzen einen Mast 10 und Auslegerarme 11,12 umfasst.

Auch bevorzugt ist eine Mäh-Hackvorrichtung 100, bei welcher die mindestens eine Anordnung zur annähernd senkrechten Ausrichtung der Pflanzen eine Führungseinrichtung 14 umfasst.

Vorteilhaft ist weiterhin eine Mäh-Hackvorrichtung 100, bei welcher die Führungseinrichtung 14 unmittelbar oberhalb der Zuführvorrichtung für abgeschnittenes Pflanzenmaterial angeordnet ist.

Erfindungsgemäß bevorzugt ist weiterhin eine Mäh-Hackvorrichtung 100, bei welcher die mindestens eine Anordnung zur annähernd senkrechten Ausrichtung der Pflanzen mindestens einen Rückhalter 15 umfasst.

Besonders bevorzugt ist eine Mäh-Hackvorrichtung 100, bei der die Anordnung zur Ausrichtung der Pflanzen auf die Dimensionen der zu erntenden Pflanze einstellbar ist.

Die Aufgabe der Erfindung wird weiterhin durch ein Verfahren zur Ernte von großwüchsigen Pflanzen und Bäumen unter Verwendung der erfindungsgemäßen Mäh-Hackvorrichtung gelöst, wobei man a) den Stamm bzw. Stängel der großwüchsigen Pflanze mit dem Schneidring durchtrennt, b) die Pflanze mittels der mindestens einen Anordnung zur Ausrichtung des Pflanzenmaterials annähernd senkrecht ausrichtet, c) den Stamm bzw. Stängel in die Zuführvorrichtung für abgeschnittene Pflanzen einbringt und damit in den Einwirkungsbereich des mindestens einen Hackmessers bringt und zerkleinert und d) die Hackschnitzel in eine Abführvorrichtung überführt.

Die Aufgabe der vorliegenden Erfindung wird also gelöst durch die Bereitstellung einer vergleichsweise wenig komplexen, einfachen und in der Herstellung und im Betrieb kostengünstigen Mäh-Hackvorrichtung zur Ernte großwüchsiger Pflanzen. Die erfindungsgemäße Mäh-Hackvorrichtung umfasst vorzugsweise eine Kombination aus vier rotierbaren Funktionsbaugruppen, nämlich einem rotierbaren Werkzeugträger für einen Schneidring und Hackmesser sowie entsprechende Zuführeinrichtungen, wodurch eine annähernd senkrechte Zuführung der abgeschnittenen Pflanzen zur weiteren Zerkleinerung ermöglicht wird.

Einzelne Elemente der erfindungsgemäßen Vorrichtung oder die gesamte Vorrichtung können sich innerhalb eines entsprechend ausgebildeten Gehäuses befinden. Dem Fachmann auf dem Gebiet des Maschinenbaus ist bekannt, dass Einhausungen sowohl die Stabilität von Komponenten erhöhen als auch Benutzer und Umwelt vor Emissionen wie Lärm schützen können. Darüber hinaus ist es einem Fachmann bekannt, dass Gehäuse auch zum Schutz der Vorrichtung oder aus Gründen des Arbeitsschutzes verwendet werden.

### Kurze Beschreibung der Zeichnungen

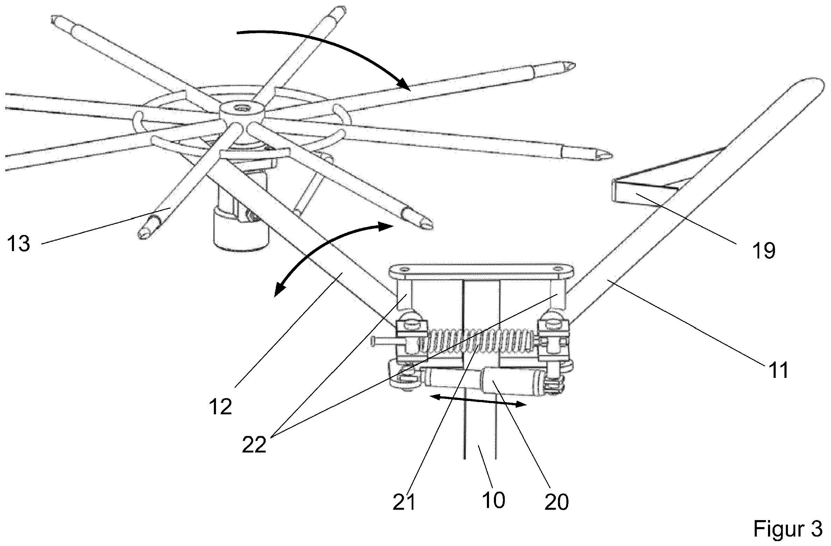

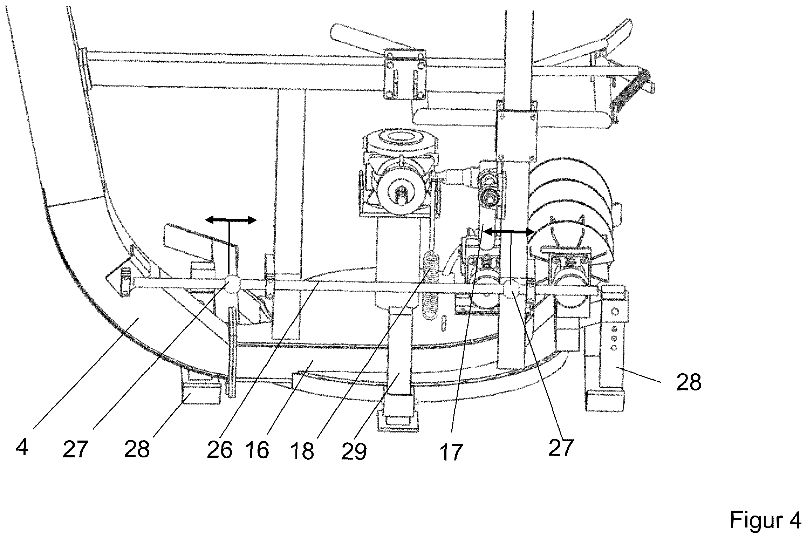

Die Figuren 1 bis 4 zeigen eine Ausführungsform der erfindungsgemäßen Vorrichtung.
Fig. 1 zeigt hierbei die Gesamtansicht dieser erfindungsgemäßen Ausführungsform von vorn.
In Fig. 2 ist eine Ausschnittsvergrößerung der Vorderansicht dieser erfindungsgemäßen Ausführungsform gezeigt.
Fig. 3 zeigt eine Rückansicht des oberen Teils der erfindungsgemäßen Ausführungsform der Vorrichtung in vergrößerter Form.
Fig. 4 zeigt in Vergrößerung die Rückansicht des unteren Teils dieser erfindungsgemäßen Ausführungsform.

Verschiedene Ausführungsformen der erfindungsgemäßen Vorrichtung werden nachfolgend unter Bezugnahme auf die beigefügten Figuren erläutert.

Ein wesentliches Merkmal der erfindungsgemäßen Mäh-Hackvorrichtung 100 ist ein kompakter rotierbarer Werkzeugträger 1, der gleichzeitig als Schwungmasse dient. Er ist mit einem Schneidring 2 zum Abschneiden der Pflanzen sowie mit mindestens einem Hackmesser 3 bestückt.

In einer Ausführungsform der Erfindung (nicht dargestellt) ist der Schneidring 2 an seinem äußeren Rand messerartig geschliffen, weist also einen Messerschliff auf.

In einer anderen Ausführungsform der Erfindung ist der Schneidring 2 an seinem äußeren Rand mit Sägezähnen besetzt. Der äußere, mit Sägezähnen besetzte Rand des Schneidringes 2 ähnelt bei dieser Ausführungsform der Erfindung einem industriell hergestellten Kreissägeblatt, das aus Ringsegmenten besteht.

Dem Fachmann ist bekannt, dass die Auswahl des zu verwendenden Schliffs oder der zu verwendenden Zahnung des Schneidringes 2 von dem zu erntenden Material abhängen wird.

Im Gegensatz zu den üblicherweise bei Hackmaschinen verwendeten Schneidscheiben sind weder der Werkzeugträger 1 noch der Schneidring 2 der erfindungsgemäßen Vorrichtung für Hackschnitzel durchlässig. Sie sind geschlossen und verfügen nicht über Öffnungen, zum Beispiel in Form von Schlitzen, durch welche das zerhackte Erntegut hindurchgeleitet werden oder hindurch fallen kann.

Auf dem Werkzeugträger 1 ist mindestens ein Hackmesser 3 angeordnet. Die Anzahl der auf dem Werkzeugträger 1 angeordneten Hackmesser 3 und auch deren Anordnung kann in Abhängigkeit vom zu erntenden Material gewählt werden. Die Anzahl der auf dem Werkzeugträger 1 angeordneten Hackmesser 3 wird bevorzugt mindestens zwei und maximal acht betragen und die Anordnung der Hackmesser ist bevorzugt radial.

In der Erfindung ist das mindestens eine Hackmesser 3 auf einem Distanzblock 6 angebracht, welcher auf dem Werkzeugträger 1 befestigt ist. Werden mehrere Hackmesser 3 verwendet, so ist jedes der Hackmesser 3 auf jeweils einem Distanzblock 6 angebracht. Durch das Zusammenwirken vom nicht durchlässigen Werkzeugträger 1, dem mindestens einen Hackmesser 3 und dem mindestens einen Distanzblock 6 wird erreicht, dass die Länge der erzeugten Hackschnitzel auf ein Obermaß begrenzt wird. Das Obermaß der Hackschnitzel, also ihre maximale Länge, ergibt sich aus der Höhe des Distanzblocks 6 mit dem darauf angeordneten Hackmesser 3. Das Obermaß der erzeugten Hackschnitzel kann somit je nach Bedarf durch die Verwendung von Distanzblöcken mit ausgewählter Höhe variiert werden, ohne dass weitere Umbauten oder Baugruppen erforderlich sind.

Im Stand der Technik ist bekannt, dass in Abhängigkeit vom Verwendungszweck der Hackschnitzel die optimale Länge unterschiedlich sein kann. Bei Verwendung der Hackschnitzel in Heizvorrichtungen werden je nach Bauart des Ofens Obermaße der Hackschnitzel vorgegeben, welche nicht überschritten werden dürfen, um den ordnungsgemäßen Betrieb nicht zu beeinträchtigen.

Zu kurze Hackschnitzel hingegen können für die Lagerung in Mieten nachteilig sein, weil der Luftzutritt durch die dichte Lagerung der kurzen Hackschnitzel behindert wird. Im Vergleich zur Lagerung größerer Hackschnitzel wird die Durchlüftung bei den kürzeren Hackschnitzeln also geringer sein.

Erfindungsgemäß wird somit eine Mäh-Hackvorrichtung bereitgestellt, welche Hackschnitzel mit einem wählbaren Obermaß erzeugen kann, ohne dass dafür komplexe Baugruppen verwendet oder aufwendige Umbauten der Vorrichtung vorgenommen werden müssen.

Dem Fachmann ist in diesem Zusammenhang offensichtlich, dass die Distanzblöcke außerdem wie eine Schwungmasse wirken.

Die Befestigung der Hackmesser 3 und der Distanzblöcke 6 kann mit im Stand der Technik bekannten Mitteln erfolgen, beispielsweise mittels Schrauben. Die Außenkanten des mindestens einen Hackmessers 3 weisen zu dem äußeren Rand des Schneidrings 2 einen Abstand auf, der etwa dem Stammdurchmesser der zu erntenden großwüchsigen Pflanzen bzw. Bäume entspricht.

Der Werkzeugträger 1, mit dem Schneidring 2 und dem darauf angeordneten mindestens einen Hackmesser 3, das gegebenenfalls auf dem Distanzblock 6 befestigt ist, bildet eine rotierbare Einheit, die beim Betrieb der Vorrichtung angetrieben wird.

Bevorzugt steht die Rotationsachse der rotierbaren Einheit annähernd senkrecht.

Dem Fachmann sind Antriebsmittel für rotierbare Einheiten bekannt. In einer bevorzugten Ausführungsform wird der Werkzeugträger 1, bestehend aus einer Welle und einem Montageflansch drehbar in einem Gehäuse 16 gelagert, wobei die Antriebsbewegung vorzugsweise über eine Gelenkwelle und eine Antriebseinheit 5, ausgebildet als Kegelradgetriebe in die Antriebswelle des Werkzeugträgers 1 eingeleitet wird.

Zur Stabilisierung des Schneidrings 2 und zur Unterstützung einer möglichst gleichbleibenden Drehzahl kann der Werkzeugträger 1 als scheibenförmige Schwungmasse ausgebildet sein. Um zu verhindern, dass die Schwungmasse auf den verbleibenden Baumresten oder Pflanzenstoppeln aufläuft, wird die Drehachse des Werkzeugträgers 1 geringfügig nach vorn in Fahrtrichtung geneigt.

Zur Abstützung der entstehenden Schnittkräfte ist in einer bevorzugten Ausführungsform im Einzugsbereich oberhalb des mindestens einen Hackmessers 3 ein Gegenhalter 7 am Gehäuse 16 angebracht.

Um neben der Zerkleinerungsfunktion eine sichere Förderwirkung der Hackmesser 3 mit den Distanzblöcken 6 - ähnlich einem Wurfgebläse - zu erreichen, wird in einer insbesondere bevorzugten Ausführungsform das Gehäuse 16 bis dicht an die Außenkante der Hackmesser 3 ausgebildet.

Zum Schutz des äußeren Randes des Schneidrings 2, nämlich der Sägezähne oder beispielsweise eines Schliffs, vor Hindernissen und Fremdkörpern wird in einer Ausführungsform das Gehäuse 16 außerhalb des wirksamen Schnittbereiches auch über die Außenkontur des Schneidrings 2 herum ausgeführt.

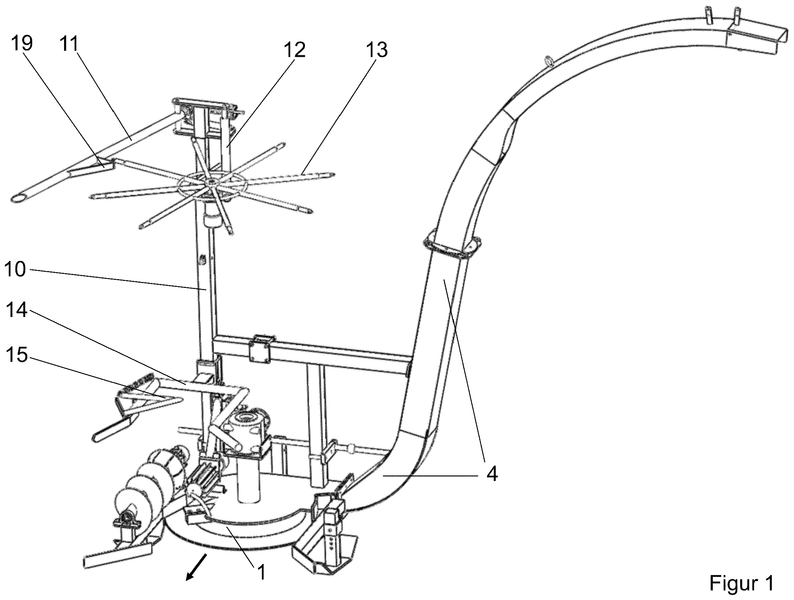

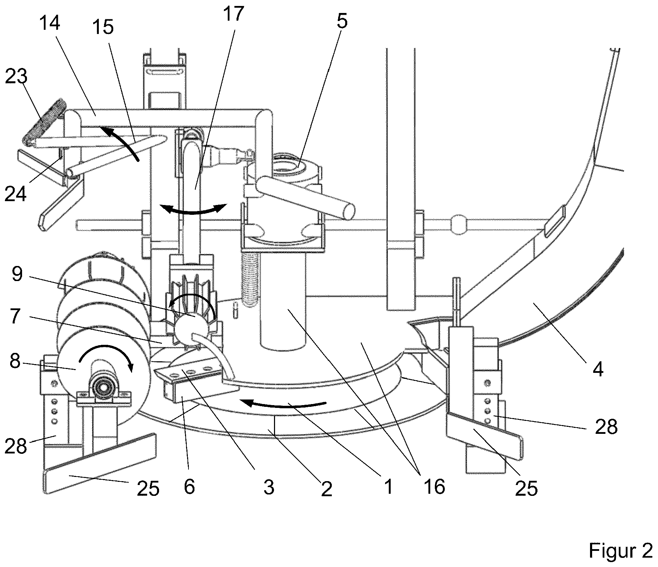

Die Abführvorrichtung für Hackschnitzel 4 dient dazu, die Hackschnitzel von der Oberfläche des Werkzeugträgers 1 weg zu einem Lager- und/oder Transportbehälter zu fördern, ohne dass zusätzliche Beschleunigungsenergie, beispielsweise durch ein Wurfrad zugeführt werden muss. Diese Abführvorrichtung 4 kann unterschiedlich ausgebildet sein, je nachdem, in welche Richtung die Hackschnitzel befördert werden sollen. In dem in den Figuren 1 und 2 gezeigten Ausführungsbeispiel ist die Abführvorrichtung als S-förmig gebogener Kanal ausgebildet.

Weiterhin umfasst die erfindungsgemäße Mäh-Hackvorrichtung 100 mindestens eine Zuführvorrichtung für abgeschnittene Pflanzen in den Einwirkungsbereich des mindestens einen Hackmessers 3.

Zur Gewährleistung der annähernd senkrechten Zuführung der abgeschnittenen Pflanzen in den Einwirkungsbereich des mindestens einen Hackmessers 3 umfasst die Zuführvorrichtung ein gegenläufig antreibbares Schnecken-Walzenpaar 8,9.

In einer bevorzugten Ausführungsform umfasst das Schnecken-Walzenpaar 8,9 eine fest am Gehäuse 16 der Vorrichtung angebrachte Einzugsschnecke 8, die im hinteren Teil in eine Walzenform übergeht, und eine beweglich aufgehängte Gegenwalze 9 mit Mitnehmerleisten.

In dem in den Figuren 1 und 2 gezeigten Ausführungsbeispiel ist die äußere Einzugsschnecke 8 fest am Gehäuse 16 angebracht und die innere Gegenwalze 9 beweglich gelagert. Diese Anordnung des Schnecken-Walzenpaares 8,9 bewirkt, dass der Abstand voneinander unterschiedliche Werte annehmen kann. Durch die Änderung des Abstands voneinander, kann sich der Abstand zwischen dem Schnecken-Walzenpaar 8,9 somit an verschiedene Stammdicken anpassen.

Dem Fachmann sind Mittel zur beweglichen Lagerung von Walzen bekannt. In einer bevorzugten Ausführungsform der Zuführvorrichtung erfolgt die bewegliche Lagerung der Gegenwalze 9 mittels einer Schwinge 17 mit Feder 18, die hinsichtlich ihrer Vorspannung über eine Schraubenspindel einstellbar ist.

Bevorzugt ist die Einzugsschnecke 8 mit Wendeln ausgestattet, die hinsichtlich Durchmesser und Steigung den zu erntenden Pflanzen angepasst sind.

Während der Vorfahrt werden die Pflanzen durch den Schneidring 2 vom Wurzelstock abgetrennt und dabei gleichzeitig durch die Rotationsbewegung des Schneidrings 2 und der Hackmesser 3 annähernd quer zur Fahrtrichtung bewegt. Die Fahrtrichtung ist in Fig. 1 als Pfeil gekennzeichnet.
Als Folge dieser Bewegung erfassen zwangsläufig die Wendeln der Einzugsschnecke 8 die Pflanzenstämme bzw. Pflanzenstängel und fördern sie nach hinten in Richtung Gegenwalze 9, Vorschubteil der Einzugsschnecke 8 und Gegenhalter 7. Nachdem die Pflanzenstämme den Bereich der kürzer ausgeführten Gegenwalze 9 und anschließend den kegelförmigen Übergangsteil von der Einzugsschnecke 8 zur Vorschubwalze erreicht haben, wird die (ebenfalls aktiv angetriebene) Gegenwalze 9 gegen die Kraft der Zugfeder 18 in Richtung Drehachse des Werkzeugträgers 1 ausgelenkt, wodurch sich gleichzeitig die Pflanzenstämme nach innen in Richtung Gegenhalter 7 bewegen. Mit dieser Bewegung geraten die Pflanzenstämme in den Außenbereich der Hackmesser 3, die sie ebenfalls in Richtung Gegenhalter 7 drücken und bis zur Höhe der Oberkante des Hackmessers 3 zerkleinern. Nachdem die Einzugsschnecke 8 in die zylindrische Vorschubwalze übergegangen ist, wirkt sie gemeinsam mit der Gegenwalze 9 vorrangig als Vorschubeinrichtung und bewirkt somit die kontinuierliche vertikale Vorschubbewegung zur vollständigen Zerkleinerung der Pflanze. Durch die Bewegung der Hackmesser 3 in Richtung Gegenhalter 7 wird gewährleistet, dass die zu zerkleinernden Pflanzen im Bereich des Walzenteils der Einzugsschnecke 8 und der Gegenwalze 9 ständig gegen den Gegenhalter 7 gedrückt und somit exakt abgeschnitten werden.

Erfindungsgemäß umfasst die Mäh-Hackvorrichtung weiterhin mindestens eine Anordnung zur annähernd senkrechten Ausrichtung der abgeschnittenen Pflanzen. Diese Anordnung verhindert, dass die abgeschnittenen Pflanzen kippen und schließlich umfallen können und damit den Wirkungsbereich der Vorrichtung nach dem Abschneiden verlassen und somit auch nicht zerhäckselt werden können.

Eine solche annähernd senkrechte Ausrichtung des Pflanzenmaterials ist sowohl zu Beginn des Erntevorgangs als auch im weiteren Verlauf des Erntevorgangs vorteilhaft. Hierfür können eine Anordnung oder mehrere Anordnungen zur Ausrichtung in der Vorrichtung vorgesehen sein. Weiterhin kann die Anordnung zur Ausrichtung so ausgebildet sein, dass sie das Pflanzenmaterial in mehreren Phasen des Erntevorgangs annähernd senkrecht ausrichtet.

In Fig. 1 ist eine Ausführungsform gezeigt, bei welcher die erfindungsgemäße Vorrichtung zwei Anordnungen zur annähernd senkrechten Ausrichtung der Pflanzen umfasst. Beide gezeigten und nachfolgend beschriebenen Anordnungen können jedoch auch so ausgebildet sein, dass sie jeweils auch die Funktion der zweiten Anordnung zur Ausrichtung übernehmen können.

In einer besonders bevorzugten Ausführungsform der Erfindung verhindert die mindestens eine Anordnung zur annähernd senkrechten Ausrichtung, dass abgeschnittene Bäume oder Pflanzen nach vorn, hinten oder seitlich umfallen und damit nicht mehr vom Schnecken-Walzenpaar 8,9 erfasst werden können.

In einer bevorzugten Ausführungsform, die auch in Fig. 1 gezeigt ist, umfasst diese Anordnung zur Ausrichtung der Pflanzen einen Mast 10, der teleskopisierbar sein kann.

Bevorzugt sind an diesem Mast 10 die Auslegerarme 11,12 angebracht. An einem dieser Auslegerarme 12 ist ein mit annähernd vertikaler Achse rotierendes Sternrad 13 angeordnet. Der andere Auslegerarm 11 besitzt einen Fanghaken 19, der sich gegenüber dem rotierenden Sternrad 13 befindet, um zu verhindern, dass abgeschnittene Bäume nach vorn fallen. Vorzugsweise ist der Auslegerarm 11 mit Fanghaken 19 in seiner Auslage durch horizontales Schwenken entsprechend den Bedingungen des Pflanzenbestands einstellbar. Dies kann von Hand über ein Spannschloss oder eine Spannschraube erfolgen. Ebenso ist eine hydraulische Verstellung (z. B. mittels Arbeitszylinder) oder eine Verstellung 20 (z. B. mittels Linearantrieb) von der Kabine oder Basismaschine denkbar. Über eine einstellbare Druckfeder 21 wird erreicht, dass der Auslegerarm 12 mit dem rotierbaren Sternrad 13 durch horizontales Schwenken um die annähernd vertikalen Achsen der Schwenklageranordnung 22 sich selbstständig der Reihenbreite des Pflanzenbestandes anpasst. Durch die dargestellte Kinematik ist gewährleistet, dass sich bei Verstellung des Auslegerarms 11 mit Fanghaken 19 die Position des Sternrades 13 hinsichtlich des Abstands zum Fanghaken 19 nicht verändert.

Diese Anordnung zur Ausrichtung der Pflanzen ist auf unterschiedliches Erntegut mit unterschiedlichen Dimensionen adaptierbar. Hierbei ist unter Dimension der Pflanze die Höhe und Breite und damit auch die Abmessung der Baum- oder Pflanzenkrone zu verstehen. Durch die Vorgabe der Geometrie des Sternrades 13, der Auslegerarme 11,12 sowie der Schwenklageranordnung 22 am Mast 10 entsteht ein individuell adaptierbarer Bereitstellungsraum, in dem das abgeschnittene Erntegut in annähernd senkrechter Position gehalten wird.

Durch das Zusammenspiel der Einzugsschnecke 8, der Gegenwalze 9 und des mindestens einen Hackmessers 3 werden die Bäume bzw. andere großwüchsige Pflanzen nun zerkleinert und nach unten gezogen, bis die Baumkrone bzw. Pflanzenkrone den Bereich zwischen den Auslegerarmen 11,12 und der Schwenklageranordnung 22 verlässt.

In der in Fig. 1 gezeigten Ausführungsform umfasst die erfindungsgemäße Vorrichtung 100 eine weitere Anordnung zur annähernd senkrechten Ausrichtung der Pflanzen oder Bäume. Diese Anordnung ist auch in der Ausschnittsvergrößerung, Fig. 2, gezeigt.

Bei der in dieser Ausführungsform integrierten Anordnung zur annähernd senkrechten Ausrichtung handelt es sich um eine dreiseitig geschlossene Führungseinrichtung 14, die unmittelbar über dem Schnecken-Walzenpaar 8,9 und dem Gegenhalter 7 angeordnet ist.

Um zu erreichen, dass die abgeschnittenen Bäume bzw. großwüchsigen Pflanzen in die Führungseinrichtung 14 eintreten können, und um zu verhindern, dass die verbliebenen Baumreste bzw. Pflanzenreste nach vorn aus der Führungseinrichtung 14 herausfallen, wird in einer bevorzugten Ausführungsform mindestens ein zusätzlicher Rückhalter 15 angebracht. Dieser schwenkt infolge der Kraftwirkung des abgeschnittenen Baumes bzw. der abgeschnittenen Pflanze in Richtung Führungskanal aus.

Nachdem der Baum bzw. die großwüchsige Pflanze den Rückhalter 15 passiert hat, schwenkt dieser, angetrieben durch eine Rückstellfeder 23, in die Ausgangslage zurück. Dies wird durch einen entsprechenden Anschlag 24 erreicht, der gleichzeitig verhindert, dass der Stamm oder Äste nach vorn aus der Führungseinrichtung 14 entweichen können.

Da die zu erntenden Pflanzen nicht immer exakt in einer Reihe wachsen, besteht die Gefahr, dass die Mäh-Hackvorrichtung beim Durchfahren des abzuerntenden Areals einzelne Pflanzen nicht im vorgesehenen Bereich der Vorrichtung aufnehmen kann. Weiterhin besteht die Gefahr, dass Pflanzen sogar umgefahren werden könnten und es folglich auch zu Beschädigungen der Mäh-Hackvorrichtung kommen kann, wenn keine Möglichkeit besteht, ein Ausweichen der erfindungsgemäßen Vorrichtung vor diesem Überfahren der Pflanzen zu bewirken.

Wenn die erfindungsgemäße Mäh-Hackvorrichtung im Frontanbau an einem Traktor verwendet wird, wird durch die im Stand der Technik bekannten Verbindungsmittel eine Höhenverstellung der Mäh-Hackvorrichtung relativ zum Traktor möglich sein ("Dreipunktverbindung"). Damit auch eine Verschiebung der Mäh-Hackvorrichtung in seitlicher Richtung in Bezug auf das Basisfahrzeug und damit ein Ausweichen möglich wird, werden im Einlaufbereich schräg angestellte Führungselemente 25 angebracht, die bewirken, dass die Mäh-Hackvorrichtung beim Kontakt mit den noch nicht abgeschnittenen Pflanzen seitlich verschoben wird. Die notwendige Verschiebung gegenüber dem Basisfahrzeug kann durch eine Führung realisiert werden, die z. B. aus einem Rundmaterial 26 und zwei Unterlenkerkugeln 27 für Fanghaken an Traktoren besteht. Durch den Einsatz von beispielsweise einer zusätzlichen Rückstellfeder kann bewirkt werden, dass sich die Mäh-Hackvorrichtung 100 wieder in die Ausgangsposition zurück bewegt.

Um die Höhe des verbleibenden Wurzelstocks den spezifischen Anforderungen anpassen zu können, werden in der Höhe veränderlich Stützen in Form von Kufen 28 vorgeschlagen, die gleichzeitig zusammen mit einer dritten höhenverstellbaren Stütze 29 für eine sichere Abstellung der Mäh-Hackvorrichtung 100 genutzt werden können.

Die Erfindung betrifft weiterhin ein Verfahren zur Ernte von großwüchsigen Pflanzen, bei welchem die erfindungsgemäße Mäh-Hackvorrichtung 100 verwendet wird.

Unter Verwendung der erfindungsgemäßen Vorrichtung 100 wird im ersten Schritt des erfindungsgemäßen Verfahrens der Stamm bzw. Stängel der großwüchsigen Pflanze mit dem Schneidring 2 durchtrennt. Die Pflanze ist somit von ihren Wurzeln abgetrennt. Die abgetrennte Pflanze wird jetzt mittels der Anordnung zur annähernd senkrechten Ausrichtung der Pflanze ausgerichtet. Anschließend wird die Pflanze in die Zuführvorrichtung für abgeschnittene Pflanzen eingebracht und in den Einwirkungsbereich des mindestens einen Hackmessers überführt. Dort wird die Pflanze in annähernd senkrechter Position zerhäckselt und die Hackschnitzel werden in eine Abführvorrichtung überführt.

### Bezugszeichenliste

- 1: Werkzeugträger
- 2: Schneidring
- 3: Hackmesser
- 4: Abführvorrichtung
- 5: Antriebseinheit, gezeigt als Kegelradgetriebe
- 6: Distanzblock
- 7: Gegenhalter
- 8: Einzugsschnecke
- 9: Gegenwalze
- 10: Mast
- 11: Auslegerarm
- 12: Auslegerarm
- 13: Sternrad
- 14: Führungseinrichtung
- 15: Rückhalter
- 16: Gehäuse
- 17: Schwinge
- 18: Zugfeder
- 19: Fanghaken
- 20: Verstellung, gezeigt als Linearantrieb
- 21: Druckfeder
- 22: Schwenklageranordnung
- 23: Rückstellfeder
- 24: Anschlag
- 25: Führungselemente
- 26: Rundmaterial
- 27: Unterlenkerkugeln
- 28: Kufe
- 29: Stütze
- 100: Mäh-Hackvorrichtung

## Patentansprüche

1. Mäh-Hackvorrichtung (100) zur Ernte großwüchsiger Pflanzen, umfassend maximal vier rotierbare Funktionsbaugruppen, nämlich
a) einen für Hackschnitzel undurchlässigen, rotierbaren Werkzeugträger (1), bestückt mit einem Schneidring (2), welcher für Hackschnitzel undurchlässig ist, und mindestens einem auf dem Werkzeugträger (1) angeordneten Hackmesser (3), wobei das mindestens eine Hackmesser (3) auf einem Distanzblock (6) angeordnet ist,
b) eine Anordnung zur annähernd senkrechten Ausrichtung der Pflanzen, umfassend ein rotierbares Sternrad (13),
c) eine Zuführungsvorrichtung für abgeschnittene Pflanzen in den Einwirkungsbereich des mindestens einen Hackmessers (3), umfassend eine antreibbare Einzugsschnecke (8) mit walzenförmigem Ende und eine rotierbare Gegenwalze (9), wobei die Länge der Gegenwalze (9) so bemessen ist, dass sie länger ist als das walzenförmige Ende der Einzugsschnecke (8),
sowie
d) eine im Abwurfbereich der Hackschnitzel angeordnete Abführvorrichtung für Hackschnitzel (4) und
e) mindestens eine Vorrichtung zur Verbindung mit einer Antriebseinheit (5).

2. Mäh-Hackvorrichtung (100) gemäß Anspruch 1, **dadurch gekennzeichnet, dass** der Schneidring (2) an seinem äußeren Rand Sägezähne oder einen Messerschliff besitzt.

3. Mäh-Hackvorrichtung (100) gemäß einem der vorangehenden Ansprüche, **dadurch gekennzeichnet, dass** oberhalb des mindestens einen Hackmessers (3) ein Gegenhalter (7) angeordnet ist.

4. Mäh-Hackvorrichtung (100) gemäß einem der vorangehenden Ansprüche, **dadurch gekennzeichnet, dass** die Abführvorrichtung für Hackschnitzel (4) als Kanal ausgebildet ist.

5. Mäh-Hackvorrichtung (100) gemäß einem der vorangehenden Ansprüche, **dadurch gekennzeichnet, dass** die Abführvorrichtung für Hackschnitzel (4) Fördermittel und/oder eine Sammelvorrichtung umfasst.

6. Mäh-Hackvorrichtung (100) gemäß einem der vorangehenden Ansprüche, **dadurch gekennzeichnet, dass** die rotierbare Gegenwalze (9) eine kegelförmiger Spitze besitzt.

7. Mäh-Hackvorrichtung (100) gemäß einem der vorangehenden Ansprüche, **dadurch gekennzeichnet, dass** die mindestens eine Anordnung zur annähernd senkrechten Ausrichtung der Pflanzen einen Mast (10) und Auslegerarme (11,12) umfasst.

8. Mäh-Hackvorrichtung (100) gemäß einem der vorangehenden Ansprüche, **dadurch gekennzeichnet, dass** die mindestens eine Anordnung zur annähernd senkrechten Ausrichtung der Pflanzen eine Führungseinrichtung (14) umfasst.

9. Mäh-Hackvorrichtung (100) gemäß Anspruch 8, **dadurch gekennzeichnet, dass** die Führungseinrichtung (14) unmittelbar oberhalb der Zuführvorrichtung für abgeschnittenes Pflanzenmaterial angeordnet ist.

10. Mäh-Hackvorrichtung (100) gemäß einem der Ansprüche 8 oder 9, **dadurch gekennzeichnet, dass** die mindestens eine Anordnung zur annähernd senkrechten Ausrichtung der Pflanzen mindestens einen Rückhalter (15) umfasst.

11. Mäh-Hackvorrichtung (100) gemäß einem der vorangehenden Ansprüche, **dadurch gekennzeichnet, dass** die Anordnung zur annähernd senkrechten Ausrichtung der Pflanzen auf die Dimensionen der zu erntenden Pflanze einstellbar ist.

12. Verfahren zur Ernte von großwüchsigen Pflanzen und Bäumen unter Verwendung der Mäh-Hackvorrichtung nach den Ansprüchen 1 bis 11, wobei man
a) den Stamm bzw. Stängel der großwüchsigen Pflanze mit dem Schneidring durchtrennt,
b) die Pflanze mittels der mindestens einen Anordnung zur Ausrichtung des Pflanzenmaterials annähernd senkrecht ausrichtet,
c) den Stamm bzw. Stängel in die Zuführvorrichtung für abgeschnittene Pflanzen einbringt und damit in den Einwirkungsbereich des mindestens einen Hackmessers bringt und zerkleinert und
d) die Hackschnitzel in eine Abführvorrichtung überführt.

## Claims

1. Mowing-chopping device (100) for harvesting plants with tall growth, comprising a maximum of four rotatable functional assemblies, namely
a) a rotatable tool carrier (1), impermeable for chips, provided with a cutting ring (2), which is impermeable for chips, and at least one chopping knife (3) that is arranged on the tool carrier (1),
wherein the at least one chopping knife (3) is arranged on a spacer block (6),
b) an assembly for the approximately perpendicular alignment of the plants, comprising a rotatable star wheel (13),
c) a feeding device for cut-off plants into the effective range of the at least one chopping knife (3), comprising one driveable feed screw (8) with cylindrical end and a rotatable counter-roller (9), wherein the length of the counter-roller (9) is dimensioned so that it is longer than the cylindrical end of the feed screw (8),
and
d) a discharge device for chips (4) arranged in the discharge region of the chips and
e) at least one device for connecting with a drive unit (5).

2. Mowing-chopping device (100), according to claim 1, **characterized in that** cutting ring (2) on its outer edge has saw teeth or a blade grinding.

3. Mowing-chopping device (100), according to one of the preceding claims, **characterized in that** above the at least one chopping knife (3) a counter-holder (7) is arranged.

4. Mowing-chopping device (100), according to one of the preceding claims, **characterized in that** the discharge device for chips (4) is designed in form of channel.

5. Mowing-chopping device (100), according to one of the preceding claims, **characterized in that** the discharge device for chips (4) comprises conveying means and/or a collecting device.

6. Mowing-chopping device (100), according to one of the preceding claims, **characterized in that** the rotatable counter-roller (9) has a cone shaped tip.

7. Mowing-chopping device (100), according to one of the preceding claims, **characterized in that** the at least one assembly for the approximately perpendicular alignment of the plants comprises a pole (10) and extension arms (11,12).

8. Mowing-chopping device (100), according to one of the preceding claims, **characterized in that** the at least one assembly for the approximately perpendicular alignment of the plants comprises a guide device (14).

9. Mowing-chopping device (100), according to claim 8, **characterized in that** the guide device (14) is arranged directly above the feeding device for cut-off plants.

10. Mowing-chopping device (100), according to one of claims 8 or 9, **characterized in that** the at least one assembly for the approximately perpendicular alignment of the plants comprises at least one retention means (15).

11. Mowing-chopping device (100), according to one of the preceding claims, **characterized in that** the assembly for the approximately perpendicular alignment of the plants is adjustable to the dimensions of the plant that is to be harvested.

12. Method for harvesting plants with tall growth and trees, using the mowing-chopping device (100) according to claims 1 to 11, wherein one
a) cuts through the trunk or stem, respectively, of the plants with tall growth with the cutting ring,
b) aligns the plant approximately perpendicular by means of the at least one assembly for alignment of the plant material,
c) introduces the trunk or stem, respectively, into the feeding device for cut-off plants and thereby brings it into the effective range of the at least one chopping knife and reduces it in size, and
d) transfers the chips into a discharge device.

## Revendications

1. Dispositif de fauchage et broyage (100) pour la récolte de plantes de grande taille, comprenant au maximum quatre groupes fonctionnels rotatifs, à savoir
a) un porte-outils rotatif (1) étanche aux copeaux, équipé d'un anneau de coupe (2) qui est étanche aux copeaux et d'au moins un couteau de broyage (3) placé sur le porte-outils (1), l'au moins un couteau de broyage (3) étant disposé sur une pièce d'écartement (6),
b) un arrangement pour l'orientation à peu près verticale des plantes, comprenant une roue en étoile rotative (13),
c) un dispositif d'alimentation de plantes coupées dans la zone d'action de l'au moins un couteau de broyage (3), comprenant une vis d'alimentation (8) pouvant être entraînée pourvue d'une extrémité en forme de rouleau, et un contre-rouleau rotatif (9), le contre-rouleau (9) ayant une longueur dimensionnée de façon qu'il soit plus long que l'extrémité en forme de rouleau de la vis d'alimentation (8),
ainsi que
d) un dispositif d'évacuation de copeaux (4) disposé dans la zone d'évacuation des copeaux et
e) au moins un dispositif de connexion à une unité d'entraînement (5).

2. Dispositif de fauchage et broyage (100) selon la revendication 1, **caractérisé en ce que** l'anneau de coupe (2) possède, au niveau de son bord extérieur, des dents de scie ou une arête tranchante.

3. Dispositif de fauchage et broyage (100) selon l'une des revendications précédentes, **caractérisé en ce qu'**un bras-support (7) est disposé au-dessus de l'au moins un couteau de broyage (3).

4. Dispositif de fauchage et broyage (100) selon l'une des revendications précédentes, **caractérisé en ce que** le dispositif d'évacuation de copeaux (4) est conçu en tant que canal.

5. Dispositif de fauchage et broyage (100) selon l'une des revendications précédentes, **caractérisé en ce que** le dispositif d'évacuation de copeaux (4) comprend un moyen de transport et/ou un moyen de collecte.

6. Dispositif de fauchage et broyage (100) selon l'une des revendications précédentes, **caractérisé en ce que** le contre-rouleau rotatif (9) possède une pointe conique.

7. Dispositif de fauchage et broyage (100) selon l'une des revendications précédentes, **caractérisé en ce que** l'au moins un arrangement pour l'orientation à peu près verticale des plantes comprend un mât (10) et des bras en porte-à-faux (11, 12).

8. Dispositif de fauchage et broyage (100) selon l'une des revendications précédentes, **caractérisé en ce que** l'au moins un arrangement pour l'orientation à peu près verticale des plantes comprend un dispositif de guidage (14).

9. Dispositif de fauchage et broyage (100) selon la revendication 8, **caractérisé en ce que** le dispositif de guidage (14) est situé immédiatement au-dessus du dispositif d'alimentation de matériau végétal coupé.

10. Dispositif de fauchage et broyage (100) selon l'une des revendications 8 ou 9, **caractérisé en ce que** l'au moins un arrangement pour l'orientation à peu près verticale des plantes comprend au moins un élément de retenue (15).

11. Dispositif de fauchage et broyage (100) selon l'une des revendications précédentes, **caractérisé en ce que** l'arrangement pour l'orientation à peu près verticale des plantes peut être réglé aux dimensions de la plante à récolter.

12. Procédé de récolte de plantes de grande taille et d'arbres en utilisant le dispositif de fauchage et broyage selon les revendications 1 à 11, dans lequel
a) le tronc resp. la tige de la plante de grande taille est sectionné/e par l'anneau de coupe,
b) la plante est orientée à peu près verticalement au moyen de l'au moins un arrangement pour l'orientation à peu près verticale du matériau végétal,
c) le tronc resp. la tige est introduit/e dans le dispositif d'alimentation de plantes coupées, et donc dans la zone d'action de l'au moins un couteau de broyage, et est déchiqueté/e et
d) les copeaux sont transférés dans un dispositif d'évacuation.
